# EUROPÄISCHE PATENTSCHRIFT

(11) **EP 4 116 256 B1**
(45) Veröffentlichungstag und Bekanntmachung des Hinweises auf die Patenterteilung: **17.07.2024**
(21) Anmeldenummer: 22183414.6
(22) Anmeldetag: 06.07.2022
(51) Int. Cl.: B67B 3/06, B65G 47/84

(54) **VORRICHTUNG ZUM ZUFÜHREN EINES BEHÄLTERVERSCHLUSSES UND VERSCHLIESSVORRICHTUNG**
DEVICE FOR GUIDING A CONTAINER CLOSURE AND CLOSURE DEVICE
DISPOSITIF D'INTRODUCTION D'UNE FERMETURE DE RÉCIPIENT ET DISPOSITIF DE FERMETURE

(30) Priorität: 06.07.2021 DE 102021117469
(43) Veröffentlichungstag der Anmeldung: 11.01.2023
(73) Patentinhaber: KRONES AG, 93073 Neutraubling (DE)
(72) Erfinder: Buchhauser, Klaus, 93073 Neutraubling (DE)
(74) Vertreter: Nordmeyer, Philipp Werner

(56) Entgegenhaltungen:
- EP-A1- 0 541 077
- DE-A1- 4 129 452
- US-A- 4 277 928
- US-A1- 2011 250 307

## Beschreibung

### Technisches Gebiet

Die vorliegende Erfindung betrifft eine Vorrichtung zum Zuführen eines Behälterverschlusses, beispielsweise eines Kronkorkens, zu einer Verschließvorrichtung zum Verschließen eines Behälters mit einem Behälterverschluss, sowie eine Verschließvorrichtung für Behälterverschlüsse.

### Stand der Technik

Zum Zuführen eines Behälterverschlusses, beispielsweise eines Kronkorkens, zu einer Verschließvorrichtung zum Verschließen eines Behälters mit dem zugeführten Behälterverschluss ist es bekannt, den Behälterverschluss mittels eines Übernahmeelements, etwa in Form einer Nase an einer Verschließeinheit der Verschließvorrichtung, von einer Übergabeplatte abzuschleppen. Diese Nase kann jedoch bei bestimmten Füllertypen nicht oder nur störanfällig eingesetzt werden. Beispielsweise kann es bei einem Kammerfüller zu Kollisionen mit den jeweiligen, die befüllten Behälter umfassenden Kammern oder deren Dichtungen kommen.

Alternativ hierzu ist es bekannt, Behälterverschlüsse vereinzelt über eine Vorrichtung mit einem Mitnahmerad zu der Verschließvorrichtung beziehungsweise deren Verschließeinheiten zuzuführen. Derartige Vorrichtungen zum Zuführen sind beispielsweise aus der DE 28 49 741 A1, der DE 27 34 599 A1, oder der EP 0 541 077 A1 bekannt. Derartige Vorrichtungen können jedoch schwer zugänglich und aufwendig zu reinigen sein.

Mit der Absicht, eine Möglichkeit der Reinigung einzelner Verschließaggregate der Verschließvorrichtung und der Vorrichtung zum Zuführen zu verbessern, ist es ferner etwa aus der DE 38 43 374 A1 bekannt, eine Kombination aus Mitnahmerad und einem Teil einer Verschlusszufuhr in Form eines Transportkanals in Richtung der Drehachse des Mitnahmerades höhenverstellbar auszubilden.

Weiterhin ist eine Vorrichtung gemäß dem Oberbegriff des Anspruchs 1 aus der US 4 277 928 bekannt.

### Darstellung der Erfindung

Ausgehend von dem bekannten Stand der Technik ist es eine Aufgabe der vorliegenden Erfindung, eine verbesserte Vorrichtung zum Zuführen eines Behälterverschlusses, bevorzugt eines Kronkorkens, an eine Verschließvorrichtung zum Verschließen eines Behälters mit einem Behälterverschluss, sowie ein eine verbesserte Verschließvorrichtung für Behälterverschlüsse bereitzustellen.

Die Aufgabe wird durch eine Vorrichtung zum Zuführen eines Behälterverschlusses, bevorzugt eines Kronkorkens, an eine Verschließvorrichtung zum Verschließen eines Behälters mit einem Behälterverschluss, mit den Merkmalen des Anspruchs 1 gelöst. Vorteilhafte Weiterbildungen ergeben sich aus den Unteransprüchen, der Beschreibung und den Figuren.

Entsprechend wird eine Vorrichtung zum Zuführen eines Behälterverschlusses, bevorzugt eines Kronkorkens, an eine Verschließvorrichtung zum Verschließen eines Behälters mit einem Behälterverschluss, vorgeschlagen, umfassend ein drehbares Mitnahmerad zum Transportieren eines Behälterverschlusses von einer Zuführposition, an welcher der zuzuführende Behälterverschluss von einer Verschlusszufuhr zugeführt wird, zu einer Übernahmeposition, an welcher der transportierte Behälterverschluss von einer Verschließvorrichtung übernommen wird. Bei der Vorrichtung ist ferner das Mitnahmerad zwischen einer zur Übernahmeposition korrespondierenden Betriebsposition und einer rückgezogenen Position, in welcher das Mitnahmerad von der Übernahmeposition beabstandet ist, verschiebbar ausgebildet.

Dadurch, dass das Mitnahmerad zwischen einer zur Übernahmeposition korrespondierenden Betriebsposition und einer rückgezogenen Position, in welcher das Mitnahmerad von der Übernahmeposition beabstandet ist, verschiebbar ausgebildet ist, kann eine verbesserte Zugänglichkeit zu dem Mitnahmerad und zu der Verschließvorrichtung, insbesondere zu einem Karussell der Verschließvorrichtung, an welchem vorzugsweise eine Mehrzahl von Verschließeinheiten und Behälteraufnahmen angeordnet sind, gegenüber herkömmlichen Vorrichtungen erzielt werden. Entsprechend können eine Montage, eine Wartung und/oder eine Reinigung der Vorrichtung und/oder der Verschließvorrichtung erleichtert beziehungsweise vereinfacht sein.

Zudem kann die Vorrichtung für eine Mehrzahl von Verschließvorrichtungen verwendet werden, auch wenn diese verschieden große Behandlungsteilkreise aufweisen, auf welchen die zu verschließenden Behälter transportiert werden. Die Anpassung auf den jeweiligen Teilkreis kann durch Einstellen der Betriebsposition, mithin entsprechend der Übernahmeposition, und der rückgezogenen Position individuell erfolgen. Folglich kann die Zuführung und Übergabe der Behälterverschlüsse auch besonders genau erfolgen.

Ferner kann durch eine erfindungsgemäße Vorrichtung die Sicherheit einer Verschließvorrichtung beziehungsweise einer Abfüllanlage zum Befüllen von Behältern mit einem Füllprodukt und Verschließen der Behälter mit einem Behälterverschluss während des Betriebs erhöht werden. Insbesondere gegen eine Kollision der Behälterverschlusszuführung, etwa dem Mitnahmerad, mit einer Verschließeinheit kann durch ein schlagartiges Zurückziehen in die zurückgezogene Position so verhindert werden.

Beim Betrieb einer Verschließvorrichtung kann es beispielsweise vorkommen, dass die Führung einer Verschließeinheit, etwa an einer Führungsrolle, über welche die vertikale Position der Verschließeinheit vorgegeben wird, einen Defekt erfährt. Als Folge kann die Verschließeinheit schwerkraftbedingt und/oder aufgrund einer Vorspannkraft nach unten fallen beziehungsweise bewegt werden, derart, dass etwa deren Verschließstempel mit der Vorrichtung zum Zuführen von Behälterverschlüssen, beispielweise dem Mitnahmerad, kollidieren würde und es zu massiven Schäden an der Zuführvorrichtung und/oder der Verschließvorrichtung kommen könnte. Aufgrund der oben genannten verschiebbaren Ausbildung des Mitnahmerades kann dieses im Falle eines Defekts der Führung einer Verschließeinheit spontan aus der Übergabeposition zurückgezogen werden, so dass eine Kollision zwischen dem Mitnahmerad und der Verschließeinheit verhindert werden kann. Vorzugsweise erfolgt ein derartiges Rückziehen als Reaktion auf eine mittels eines Sensors beziehungsweise Detektors erkannten Defekts, etwa einer gebrochenen Rolle. Das Mitnahmerad kann dann beispielsweise binnen Sekundenbruchteilen aus dem Kollisionsbereich zurückgezogen werden.

Die rückgezogene Position ist gegenüber der Übernahmeposition derart orientiert, dass das Mitnahmerad bei Anordnung der Vorrichtung an einer Verschließvorrichtung bezogen auf die Verschließvorrichtung weiter von der Verschließvorrichtung entfernt ist als in der mit der Übergabeposition korrespondierenden Betriebsposition, wobei die Entfernung beziehungsweise Verschiebung insbesondere eine horizontale Komponente umfasst oder sich gar gänzlich horizontal erstreckt. Beispielsweise kann durch ein zwischen einer Drehachse des Mitnahmerades und einer Drehachse eines Karussells der Verschließvorrichtung vorliegender Abstand durch Verschieben des Mitnahmerades aus der Betriebsposition in die rückgezogene Position vergrößert werden. Der Begriff "Rückziehen" beziehungsweise "Zurückziehen" kann folglich als ein Vergrößern des Abstandes zur Verschließvorrichtung relativ zur Drehachse des Karussells, beispielsweise in einer Richtung senkrecht zur Drehachse des Karussells, verstanden werden.

Gemäß einer bevorzugten Ausführungsform ist das Mitnahmerad um eine bevorzugt im Wesentlichen vertikal orientierte Drehachse drehbar ausgebildet.

Als besonders vorteilhaft hat sich herausgestellt, wenn eine Verschieberichtung des Mitnahmerades zwischen der Betriebsposition und der rückgezogenen Position im Wesentlichen horizontal orientiert ist.

Die Verschieberichtung kann einer bevorzugten Ausführungsform folgend senkrecht zur Drehachse des Mitnahmerades orientiert sein.

Alternativ oder zusätzlich kann die Verschieberichtung in einer Ebene senkrecht zur Drehachse des Mitnahmerades betrachtet in einem Bereich von ±90° zu einer Geraden, die sich bezogen auf die Drehachse in radialer Richtung durch die Übernahmeposition erstreckt, orientiert sein, wobei die Verschieberichtung bevorzugt in Richtung der Geraden, die sich bezogen auf die Drehachse in radialer Richtung durch die Übernahmeposition erstreckt, orientiert ist. So kann erzielt werden, dass bei einem Verschieben des Mitnahmerades aus der Übergabeposition sich ein Abstand zwischen der Drehachse des Mitnahmerades und der Verschließvorrichtung, insbesondere einer zentralen Drehachse der Verschließvorrichtung, vergrößert.

Gemäß einer weiteren bevorzugten Ausführungsform ist bezogen auf eine Bewegungsrichtung der Verschließvorrichtung dem Mitnahmerad eine Abstreifeinheit vorgelagert, mittels welcher ein etwaig in einer Verschließeinheit der Verschließvorrichtung gehaltener, in einem zeitlich zuvor vorgesehenen Verschließvorgang nicht auf einen Behälter applizierter und daher ungewollt in der Verschließeinheit verbliebener Behälterverschluss aus der Verschließeinheit entfernt werden kann, so dass die Verschließeinheit in der Übernahmeposition einen neuen Behälterverschluss von dem Mitnahmerad übernehmen kann.

Vorzugsweise umfasst die Abstreifeinheit eine Abstreiferplatte und ein Entnahmeelement zum Entnehmen eines durch die Verschließvorrichtung gehaltenen Behälterverschlusses, bevorzugt einen Vorsatz oder ein Magnetelement. Die Abstreiferplatte ist bevorzugt zumindest teilweise orientiert, um ein Abstreifen eines in Bewegungsrichtung der Verschließvorrichtung bewegbares Abstreifbleches der Verschließvorrichtung bereitzustellen. Es hat sich als vorteilhaft herausgestellt, wenn die Abstreiferplatte zumindest teilweise im Wesentlichen horizontal orientiert angeordnet ist.

Unter "Abstreifen" wird hierbei eine Bewegung des Abstreifbleches über die Abstreiferplatte mit einem Abstand zwischen Abstreiferplatte und Abstreifblech kleiner als die Höhe des durch die Vorrichtung transportierten Behälterverschlusses verstanden.

Es hat sich als vorteilhaft herausgestellt, wenn die Abstreiferplatte zumindest in einem Abstreifabschnitt der Bewegungsbahn der Verschließeinheiten der Verschließvorrichtung folgt. Vorzugsweise ist das Entnahmeelement in Bewegungsrichtung der Verschließeinheiten gesehen im Anfangsbereich des Abstreifabschnitts angeordnet. Beispielsweise kann ein Magnetelement unterhalb der Abstreiferplatte vorgesehen sein. Durch das Magnetelement kann ein in der Verschließeinheit gehaltener Behälterverschluss, etwa ein Kronkorken, aufgrund magnetischer Anziehung aus der Verschließeinheit auf die Abstreiferplatte gezogen werden. Mittels des Abstreifbleches kann dann der Behälterverschluss aus dem Bereich des Magnetelements geschoben beziehungsweise gestreift werden, vorzugsweise zu einer Verschlussauffangeinheit zum Auffangen von ausgeschleusten Behälterverschlüssen.

Gemäß einer weiteren bevorzugten Ausführungsform ist die Abstreifeinheit zwischen einer Betriebsposition, in welcher ein Abstreifen mittels des Abstreifbleches der Verschließvorrichtung ermöglicht ist, und einer rückgezogenen Position verschiebbar ausgebildet. Eine Verschieberichtung der Abstreifeinheit ist hierbei bevorzugt parallel zur Verschieberichtung des Mitnahmerades ausgebildet, wobei bevorzugt das Mitnahmerad und die Abstreifeinheit gemeinsam verschiebbar ausgebildet sind, bevorzugt mittels eines gemeinsamen Antriebes und/oder gemeinsamen Grundgestells. Alternativ können das Mitnahmerad und die Abstreifeinheit auch unabhängig voneinander verschiebbar ausgebildet sein, wobei dem Mitnahmerad und der Abstreifeinheit dann bevorzugt jeweils ein eigener Antrieb zugeordnet ist.

Bevorzugt ist ein Antrieb zum Verschieben des Mitnahmerads aus der Betriebsposition in die rückgezogene Position vorgesehen, welcher zum Verschieben mit einer hohen Geschwindigkeit eingerichtet ist, bevorzugt in Form eines verriegelten und vorgespannten Federpakets und/oder eines verriegelten und druckbeaufschlagten Pneumatikzylinders, welches bei Vorliegen einer Kollisionswarnung durch eine Steuerung/Regelung entriegelt wird, um eine schlagartige Verschiebung zu erreichen.

Bevorzugt ist ein Antrieb zum Verschieben der Abstreifeinheit von der Betriebsposition in die rückgezogene Position vorgesehen, welcher zum Verschieben mit einer hohen Geschwindigkeit eingerichtet ist, bevorzugt in Form eines verriegelten und vorgespannten Federpakets und/oder eines verriegelten und druckbeaufschlagten Pneumatikzylinders, welches bei Vorliegen einer Kollisionswarnung durch eine Steuerung/Regelung entriegelt wird, um eine schlagartige Verschiebung zu erreichen.

Gemäß einer weiteren bevorzugten Ausführungsform ist eine Verschlusszufuhr zum sukzessiven radialen Zuführen von Behälterverschlüssen an das Mitnahmerad vorgesehen. Vorzugsweise umfasst die Verschlusszufuhr eine Zuführrinne, über welche dem Mitnahmerad einzeln Behälterverschlüsse zugeführt werden, wobei die Zuführrinne vorzugsweise derart ausgebildet ist, dass die Behälterverschlüsse zumindest unterstützt durch die Gravitationskraft in Richtung des Mitnahmerades bewegt werden.

Die Verschlusszufuhr kann bevorzugt in einer Ebene senkrecht zur Drehachse des Mitnahmerades betrachtet in einem Bereich von ±90° zur Verschieberichtung auf Seiten der Übernahmeposition angeordnet sein. Dann kann die Verschlusszufuhr ortsfest angeordnet sein, wobei bei einem Verschieben des Mitnahmerades des Mitnahmerades aus der Betriebsposition, mithin einem Rückziehen des Mitnahmerades, keine Kollision zwischen Mitnahmerad und Verschlusszufuhr auftritt.

Alternativ oder zusätzlich kann die Verschlusszufuhr zwischen einer zum Aufnahmepunkt korrespondierenden Zuführposition und einer versetzen Position bewegbar ausgebildet sein, wobei durch Bewegen der Verschlusszufuhr in die versetzte Position die Verschlusszufuhr außerhalb eines Kollisionsraumes des Mitnahmerades bringbar ist. Beispielsweise kann die Verschlusszufuhr in ihre versetzte Position bewegt werden, bevor das Mitnahmerad aus der Betriebsposition verschoben wird. Alternativ können die beiden vorgenannten Bewegungen simultan erfolgen.

Unter dem Begriff "Kollisionsraum" wird der Raumbereich verstanden, welcher von dem Mitnahmerad insgesamt bei Bewegungen zwischen der Betriebsposition und der rückgezogenen Position benutzt wird beziehungsweise durchlaufen wird.

Gemäß einer weiteren bevorzugten Ausführungsform ist eine Mehrzahl von Verschlusszufuhren vorgesehen, wobei bevorzugt jede Verschlusszufuhr zum Zuführen eines Typs von unterschiedlichen Typen von Behälterverschlüssen ausgebildet ist, wobei bevorzugt bezogen auf eine sich durch die Übernahmeposition in Richtung der Verschieberichtung des Mitnahmerades erstreckende Achse auf gegenüberliegenden Seiten des Mitnahmerades jeweils zumindest eine Verschlusszufuhr angeordnet ist. Vorzugsweise sind zumindest zwei, besonders bevorzugt genau zwei Verschlusszufuhren vorgesehen, wobei diese bevorzugt bezogen auf die sich durch die Übernahmeposition in Richtung der Verschieberichtung des Mitnahmerades erstreckende Achse auf gegenüberliegenden Seiten des Mitnahmerades angeordnet sind.

Gemäß einer weiteren bevorzugten Ausführungsform ist eine Steuerung/Regelung vorgesehen, welche zum Steuern/Regeln der Position des Mitnahmerades, der Abstreifeinheit und/oder der mindestens einen Verschlusszufuhr ausgebildet ist, wobei die Steuerung/Regelung bevorzugt eingerichtet ist, auf eine Kollisionswarnung das Mitnahmerad und/oder die Abstreifeinheit in die jeweilige rückgezogene Position zu bewegen, und bevorzugt die mindestens eine Verschlusszufuhr aus dem Kollisionsraum zu bewegen, vorzugweise jeweils mit einer hohen Geschwindigkeit der jeweiligen Bewegung beziehungsweise Verschiebung. Insbesondere kann dadurch auf einem Defekt einer Führung einer Verschließeinheit der Verschließvorrichtung, etwa einem Bruch einer Führungsrolle, reagiert werden und so eine Kollision zwischen der aufgrund des Defekts nach unten, mithin in Gravitationsrichtung, gerutschten Verschließeinheit und dem Mitnahmerad und/oder der Abstreifeinheit verhindert werden.

Das Zurückziehen mit hoher Geschwindigkeit, bevorzugt quasi schlagartig, kann durch das Bereitstellen eines entsprechenden Energiespeichers erreicht werden. Hier kann beispielsweise ein vorgespanntes Federpaket oder ein mit Druck vorgespannter pneumatischer Zylinder vorgesehen sein, deren Energie durch Entriegelung einer Verriegelung freigesetzt wird und entsprechend ein schlagartiges Zurückziehen ermöglicht.

Gemäß einer weiteren bevorzugten Ausführungsform ist eine Verschlussauffangeinheit, bevorzugt umfassend einen bevorzugt trichterförmigen Zulauf und/oder eine Aufnahmewanne oder einen Aufnahmekorb, zumindest teilweise unterhalb der Abstreifeinheit und/oder unterhalb des Mitnahmerades angeordnet.

Vorzugsweise ist die Verschlussauffangeinheit ausgebildet, von der Abstreifeinheit abgestreifte Behälterverschlüsse aufzunehmen, vorzugsweise zumindest, wenn sich die Abstreifeinheit in der Betriebsposition befindet.

Alternativ oder zusätzlich ist die Verschlussauffangeinheit bevorzugt ausgebildet, von dem Mitnahmerad ausgeleitete Behälterverschlüsse aufzufangen, bevorzugt zumindest wenn sich das Mitnahmerad in der rückgezogenen Position befindet,

Die Verschlussauffangeinheit ist alternativ oder zusätzlich bevorzugt ausgebildet, aus der Verschlusszufuhr ausgeleitete Behälterverschlüsse aufzufangen, bevorzugt zumindest wenn sich das Mitnahmerad in der rückgezogenen Position befindet.

Die oben gestellte Aufgabe wird weiterhin durch eine Verschließvorrichtung für Behälterverschlüsse mit den Merkmalen des Anspruchs 9 gelöst. Vorteilhafte Weiterbildungen ergeben sich aus den Unteransprüchen sowie der vorliegenden Beschreibung und den Figuren.

Entsprechend wird eine Verschließvorrichtung für Behälterverschlüsse vorgeschlagen, umfassend eine in eine Bewegungsrichtung bewegbare Behälteraufnahme zum Aufnehmen eines zu verschließenden Behälters und eine der Behälteraufnahme zugeordnete, relativ zur Behälteraufnahme bewegliche Verschließeinheit zum Verschließen des in der Behälteraufnahme gehaltenen Behälters mit einem Behälterverschluss. Die Verschließvorrichtung für Behälterverschlüsse umfasst ferner eine Vorrichtung zum Zuführen eines Behälterverschlusses gemäß einem der vorstehenden Ausführungsformen.

Dadurch, dass Verschließvorrichtung für Behälterverschlüsse eine Vorrichtung zum Zuführen eines Behälterverschlusses gemäß einem der vorstehenden Ausführungsformen umfasst beziehungsweise eine derartige Vorrichtung an der Verschließvorrichtung vorgesehen ist, können die hinsichtlich der Vorrichtung beschriebenen Vorteile und Wirkungen in analoger Weise auch durch die Verschließvorrichtung für erzielt werden, und umgekehrt.

Gemäß einer bevorzugten Ausführungsform ist die Verschließvorrichtung in Rundläuferbauweise ausgebildet, wobei bevorzugt ein drehbares Karussell, vorzugsweise an seinem äußeren Umfang, die Behälteraufnahme und die Verschließeinheit aufweist.

Vorzugsweise sind das Mitnahmerad und das Karussell derart angeordnet, dass ein Transportteilkreis des Mitnahmerades, auf welchem ein zuzuführender Behälterverschluss durch das Mitnahmerad transportiert wird, und ein Förderteilkreis des Karussells, auf welchem die Verschließeinheit durch Drehen des Karussells bewegt wird, tangential zueinander angeordnet sind und/oder sich in der Übernahmeposition treffen.

### Kurze Beschreibung der Figuren

Bevorzugte weitere Ausführungsformen der Erfindung werden durch die nachfolgende Beschreibung der Figuren näher erläutert. Dabei zeigen:
- Figur 1: schematisch eine Draufsicht einer Verschließvorrichtung für Behälterverschlüsse mit einer Vorrichtung zum Zuführen eines Behälterverschlusses an die Verschließvorrichtung;
- Figur 2: schematisch eine weitere Draufsicht der Verschließvorrichtung aus Figur 1;
- Figur 3: schematisch eine perspektivische Seitenansicht eines Teilbereichs einer Verschließvorrichtung für Behälterverschlüsse mit einer Vorrichtung zum Zuführen eines Behälterverschlusses an die Verschließvorrichtung gemäß einer weiteren Ausführungsform;
- Figur 4: schematisch eine weitere perspektivische Seitenansicht der Verschließvorrichtung aus Figur 3;
- Figur 5: schematisch eine perspektivische Detailansicht eines Teilbereichs der Vorrichtung aus Figur 3;
- Figur 6: schematisch eine weitere perspektivische Seitenansicht der Verschließvorrichtung aus Figur 3;
- Figur 7: schematisch eine weitere perspektivische Seitenansicht der Verschließvorrichtung aus Figur 6; und
- Figur 8: schematisch eine Draufsicht einer Verschließvorrichtung für Behälterverschlüsse mit einer Vorrichtung zum Zuführen eines Behälterverschlusses an die Verschließvorrichtung gemäß einer weiteren Ausführungsform.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente in den unterschiedlichen Figuren mit identischen Bezugszeichen versehen, und auf eine wiederholte Beschreibung dieser Elemente wird teilweise verzichtet, um Redundanzen zu vermeiden.

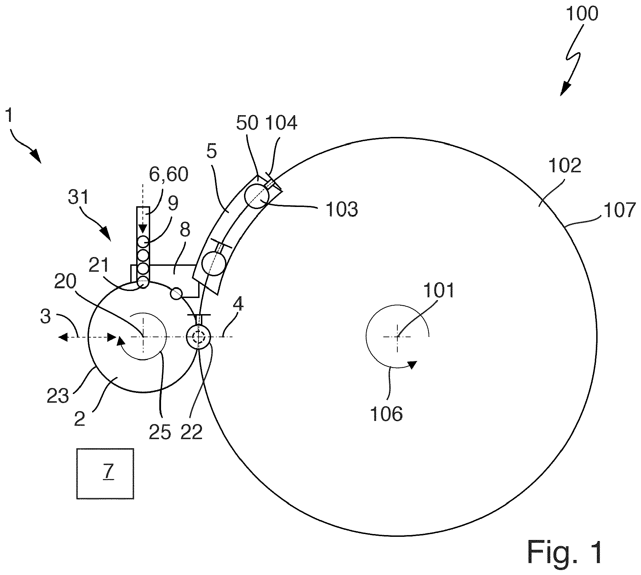

In Figur 1 ist schematisch eine Draufsicht einer Verschließvorrichtung 100 für Behälterverschlüsse 9 mit einer Vorrichtung 1 zum Zuführen eines Behälterverschlusses 9 an die Verschließvorrichtung 100 gezeigt. Die Verschließvorrichtung 100 ist vorliegend zum Verschließen von Behältern in der Form von Glasflaschen (nicht gezeigt) mit einem Kronkorken ausgebildet. Entsprechend ist die Vorrichtung 1 zum Zuführen von Kronkorken an die Verschließvorrichtung 100 ausgebildet. Alternativ können die Verschließvorrichtung 100 und entsprechend die Vorrichtung 1 auch zur Verarbeitung anderer Behälterverschlüsse, beispielsweise Schraubverschlüsse oder Anrollverschlüsse, ausgebildet sein.

Die Verschließvorrichtung 100 ist in Rundläuferbauweise ausgebildet. Sie umfasst ein um eine zentrale Drehachse 101 rotierbares Karussell 102, an dessen Umfang auf einem Förderteilkreis 107 eine Mehrzahl von parallel zur Drehachse 101 bewegbare Verschließeinheiten 103 zum Verschließen eines in einer der jeweiligen Verschließeinheit 103 zugeordneten Behälteraufnahme (hier nicht gezeigt) gehaltenen Behälters (nicht gezeigt) mit einem Behälterverschluss 9 in Bewegungsrichtung 106 bewegt werden.

Die Vorrichtung 1 umfasst ein um eine horizontal orientierte Drehachse 20 drehbares Mitnahmerad 2, mittels welchem ein Behälterverschluss 9 von einer Zuführposition 21, an welcher der zuzuführende Behälterverschluss 9 von einer Verschlusszufuhr 6 zugeführt wird, entlang eines Transportteilkreises 23 zu einer Übernahmeposition 22, an welcher der transportierte Behälterverschluss 9 von einer Verschließeinheit 103 der Verschließvorrichtung 100 übernommen wird, transportiert wird.

Das Mitnahmerad 2 ist in einer vorgegebenen Verschieberichtung 3 zwischen einer zur Übernahmeposition 22 korrespondierenden Betriebsposition 31, welche der Position des Mitnahmerades 2 in Figur 1 entspricht, und einer rückgezogenen Position (hier nicht gezeigt) verschiebbar ausgebildet. In der rückbezogenen Position ist das Mitnahmerad 2 von der Übernahmeposition 22 beabstandet.

In der Betriebsposition 31 ist das Mitnahmerad 2 derart relativ zum Karussell 102 angeordnet, dass der Transportteilkreis 23 des Mitnahmerades 2 und der Förderteilkreis 107 des Karussells 102 tangential zueinander angeordnet sind, sich mithin in der Übernahmeposition 22 tangieren.

Die Verschieberichtung 3 des Mitnahmerades 2 ist vorliegend optional im Wesentlichen horizontal orientiert. Mit anderen Worten ist die Verschieberichtung 3 im Wesentlichen senkrecht zur Gravitationsrichtung, welche der Richtung der Draufsicht der Figur 1 entspricht, orientiert. Entsprechend ist die Verschieberichtung 3 auch senkrecht zur Drehachse 20 des Mitnahmerades 2 orientiert. Die Verschieberichtung 3 erstreckt sich in einer Ebene senkrecht zur Drehachse 20 betrachtet, welche der Darstellung in Figur 1 entspricht, in Richtung einer Geraden 4, die sich bezogen auf die Drehachse 20 in radialer Richtung durch die Übernahmeposition 22 erstreckt. Aufgrund der zuvor beschriebenen tangentialen Anordnung des Transportteilkreises 23 und des Förderteilkreises 107 entspricht die Verschieberichtung 3 auch einer radialen Richtung der zentralen Drehachse 101 des Karussells 102.

Die Verschlusszufuhr 6 ist zum sukzessiven radialen Zuführen von Behälterverschlüssen 9 an das Mitnahmerad 2 ausgebildet. Sie ist in der Ebene senkrecht zur Drehachse 20 des Mitnahmerades 2 betrachtet senkrecht zur Verschieberichtung 3 angeordnet. Die Verschlusszufuhr 6 umfasst vorliegend eine Zuführrinne 60, mittels welcher dem Mitnahmerad 2 vereinzelte Behälterverschlüsse 9 schwerkraftbedingt zugeführt werden.

Alternativ kann die Verschlusszufuhr6 auch in einem Bereich von ±90° zur Verschieberichtung 3 auf Seiten der Übernahmeposition 22 angeordnet sein und/oder zwischen der Zuführposition 21 und einer versetzen Position bewegbar ausgebildet sein, wobei dann durch Bewegen der Verschlusszufuhr 6 in die versetzte Position die Verschlusszufuhr 6 außerhalb eines Kollisionsraumes des Mitnahmerades 2 bringbar ist.

Die Vorrichtung 1 umfasst ferner eine Abstreifeinheit 5, welche dem Mitnahmerad 2 bezogen auf die Bewegungsrichtung 106 der Verschließvorrichtung 100 und entsprechend auch bezogen auf die Transportrichtung 25 vorgelagert ist. Mittels der Abstreifeinheit 5 ist es möglich, einen in einer Verschließeinheiten 103 gehaltenen Behälterverschluss 9 aus der Verschließeinheit 103 zu entfernen, bevor diese Verschließeinheit 103 im Übernahmepunkt 22 einen neu zugeführten Behälterverschluss 9 von dem Mitnahmerad 2 übernimmt.

Zu diesem Zwecke umfasst die Abstreifeinheit 5 eine Abstreiferplatte 50, welche sich in einem Abschnitt des Förderteilkreises 107 entlang des Förderteilkreises 107 erstreckt. Unterhalb der Abstreiferplatte 50 umfasst die Abstreifeinheit 5 ein Entnahmeelement zum Entnehmen des in der Verschließeinheit 103 gehaltenen Behälterverschlusses 9 in Form eines Magnetelements 51. Aufgrund der magnetischen Anziehung des Magnetelements 51 auf den Behälterverschluss 9 in Form des Kronkorkens wird dieser aus der Verschließeinheit 103 auf die Abstreiferplatte 50 gezogen.

Jede Verschließeinheit 103 umfasst ein Abstreifblech 104, welches bei Bewegung der jeweiligen Verschließeinheit 103 in Bewegungsrichtung 106 über die Abstreiferplatte 50 abstreift. Dieses "Abstreifen" entspricht einer Bewegung des Abstreifblechs 104 über die Abstreiferplatte 50 mit einem Abstand zwischen Abstreiferplatte 50 und Abstreifblech 104, welcher kleiner ist als die Höhe der Behälterverschlüsse 9. Entsprechend fördert beziehungsweise schiebt das Abstreifblech 104 den aus der Verschließeinheit 103 entnommenen Behälterverschluss 9 in Bewegungsrichtung 106 über die Abstreiferplatte 50 bis zu einer Verschlussauffangeinheit 8 zum Aufnehmen von mittels der Abstreifeinheit 5 aus Verschließeinheiten 103 entnommenen Behälterverschlüssen 9, welche sich teilweise unterhalb der Abstreifeinheit 5 und unterhalb der Verschlusszufuhr 6 erstreckt.

Die Abstreifeinheit 5 ist analog zum Mitnahmerad 2 zwischen einer Betriebsposition 31, in welcher ein Abstreifen via der Abstreifbleche 104 der Verschließvorrichtung 100 ermöglicht ist, und einer rückgezogenen Position verschiebbar ausgebildet. Die Betriebsposition 31 entspricht der in Figur 1 dargestellten Position der Abstreifeinheit 5.

Die Abstreifeinheit 5 ist ebenfalls in der Verschieberichtung 3 verschiebbar ausgebildet. Vorliegend ist die Abstreifeinheit 5 ausgebildet, gemeinsam mit dem Mitnahmerad 2 verschoben zu werden. Alternativ kann die Abstreifeinheit 5 aber auch unabhängig von dem Mitnahmerad 2 verschiebbar ausgebildet sein. Ferner kann die Verschieberichtung der Abstreifeinheit 5 auch eine andere Orientierung aufweisen als Verschieberichtung 3 des Mitnahmerades 2. Beispielsweise kann die Verschieberichtung der Abstreifeinheit 5 bezogen auf die Drehachse 101 der Verschließvorrichtung 100 in radialer Richtung orientiert sein.

Die Vorrichtung 1 umfasst ferner eine Steuerung/Regelung zum Steuern/Regeln der Position des Mitnahmerades 2 und/oder der Abstreifeinheit 5, wobei die Steuerung/Regelung 7 vorliegend eingerichtet ist, auf eine Kollisionswarnung hin das Mitnahmerad 2 und die Abstreifeinheit 5 mit hoher Geschwindigkeit in die rückgezogene Position 31 zu bewegen.

Das Zurückziehen mit hoher Geschwindigkeit, bevorzugt quasi schlagartig, kann durch das Bereitstellen eines entsprechenden Energiespeichers erreicht werden. Hier kann beispielsweise ein vorgespanntes Federpaket oder ein mit Druck vorgespannter pneumatischer Zylinder vorgesehen sein, deren Energie durch Entriegelung einer Verriegelung freigesetzt wird und entsprechend ein schlagartiges Zurückziehen ermöglicht.

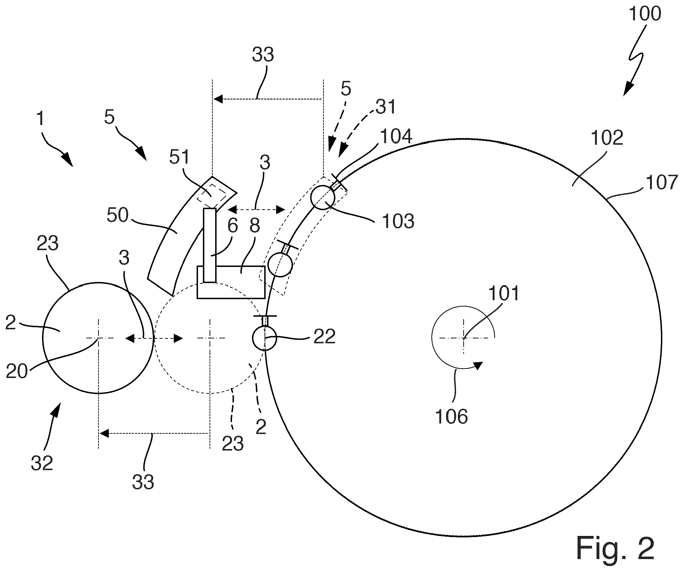

Figur 2 zeigt schematisch eine weitere Draufsicht der Verschließvorrichtung 100 aus Figur 1. In dieser Darstellung sind das Mitnahmerad 2 und die Abstreifeinheit 5 aus der mittels gestrichelten Linien angedeuteten Betriebsposition 31 in Verschieberichtung 3 um eine vorgegebene Verschiebung 33 in die rückgezogene Position 32 verschoben. Entsprechend sind das Mitnahmerad 2 und die Abstreifeinheit 5 von dem Karussell 102, insbesondere dem Förderteilkreis 107, beabstandet.

Durch das Verschieben des Mitnahmerades 2 können in der Verschlusszufuhr 6 befindliche Behälterverschlusses 9 in die Verschlussauffangeinheit 8 aus geschleust werden, beispielsweise wenn ein anderer Behälterverschluss-Typ verarbeitet werden soll.

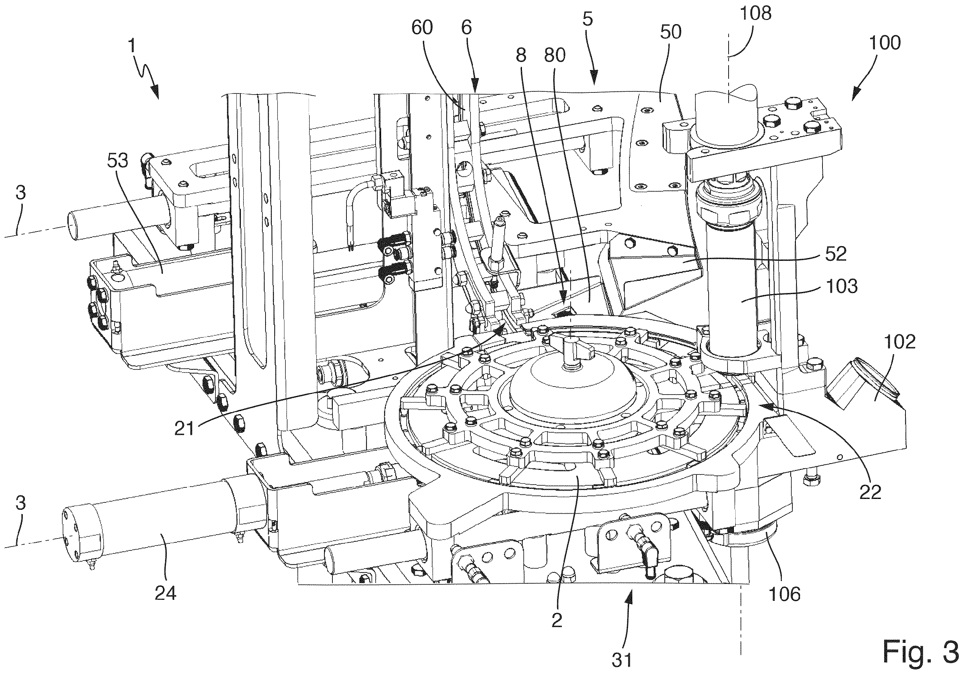

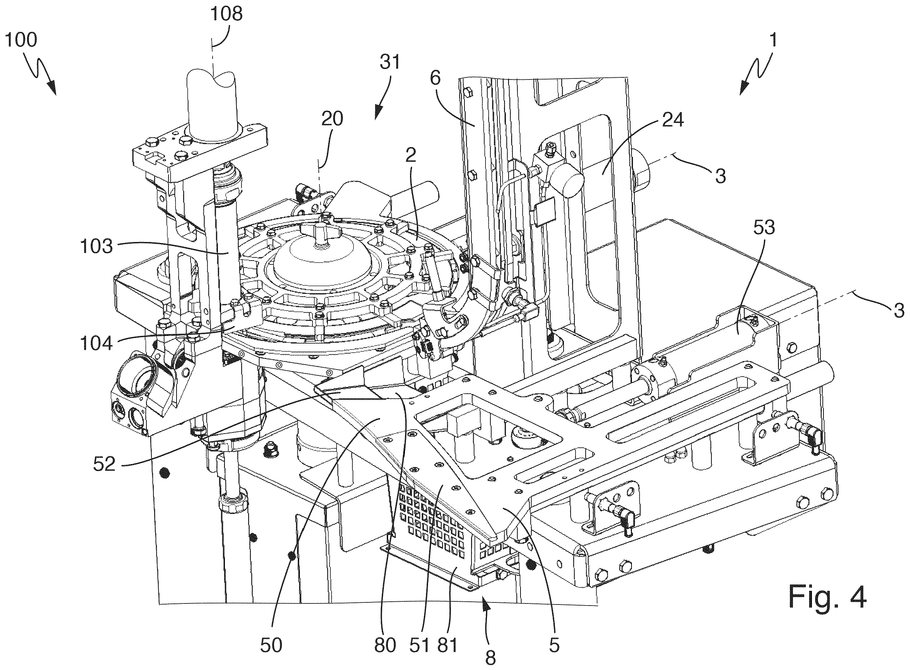

Die Figuren 3 und 4 zeigen schematisch jeweils eine perspektivische Seitenansicht eines Teilbereichs einer Verschließvorrichtung 100 für Behälterverschlüsse 9 mit einer Vorrichtung 1 zum Zuführen eines Behälterverschlusses an die Verschließvorrichtung 100 gemäß einer weiteren Ausführungsform.

Die Verschließvorrichtung 100 und die Vorrichtung 1 entsprechen in ihrem Aufbau und in ihrer Funktionsweise im Wesentlichen der Ausführungsform gemäß der Figuren 1 und 2.

In Figur 3 und Figur 4 sind das Mitnahmerad 2 und die Abstreifeinheit 5 in der Betriebsposition 31 gezeigt. Zum Verschieben des Mitnahmerades 2 in Verschieberichtung 3 umfasst dieses einen mittels der Steuerung/Regelung 7 (siehe Figur 1) steuerbaren/regelbaren Antrieb 24, vorliegend in Form eines Pneumatikzylinders oder Hydraulikzylinders.

Ferner umfasst die Abstreifeinheit 5 einen Antrieb 53, mittels welcher die Abstreifeinheit 5 via der Steuerung/Regelung 7 in Verschieberichtung 3 verschoben werden kann. Auch die Abstreifeinheit 5 kann mittels ihres Antriebs 53 auf die gleiche Weise zurückgezogen werden, wie das Mitnehmerrad 5, um auch hier eine Kollision einer Verschließeinheit mit der Abstreifeinheit 5 zu vermeiden.

In einer bevorzugten Ausführungsform liegt der Antrieb 24 in Form eines mit Druckluft vorgespannten Pneumatikzylinders vor, der Energie zum schlagartigen Zurückziehen des Mitnehmerrades 2 speichert. Die gespeicherte Energie kann durch das Entriegeln einer entsprechenden Verriegelung erreicht werden, die via der Steuerung/Regelung 7 dann beim Vorliegen einer Kollisionswarnung ausgelöst wird.

Um via der Abstreifeinheit 5 aus den Verschließeinheiten 103 entnommene Behälterverschlüsse 9 der Verschlussauffangeinheit 8 zuzuführen, umfasst die Abstreifeinheit 5 ein Ableitblech 52, welches mittels der Abstreifbleche 104 von der Abstreiferplatte 50 abgestreifte Behälterverschlüsse 9 einem Zulauf 80 der Verschlussauffangeinheit 8 schwerkraftbedingt zuführt. Aus dem Zulauf 80 gelangen die Behälterverschlüsse 9 wiederum schwerkraftbedingt in eine Aufnahmewanne 81 der Verschlussauffangeinheit 8.

Mittels des Bezugszeichens 108 ist die Längsrichtung der Verschließeinheiten 103 angedeutet, welche auch der Bewegungsrichtung der Verschließeinheiten 103 entspricht.

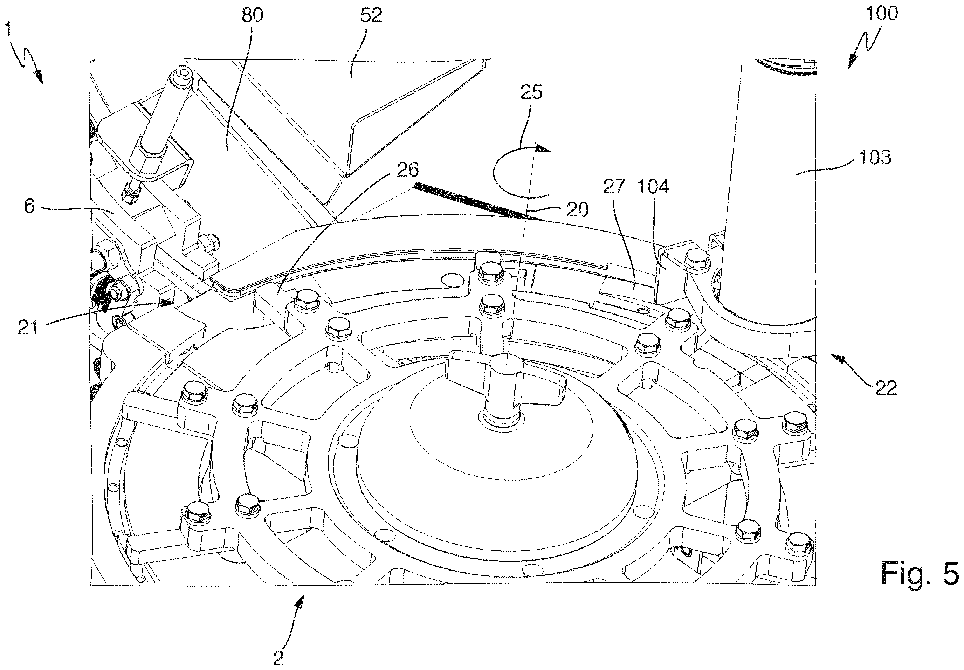

Figur 5 zeigt eine perspektivische Detailansicht eines Teilbereichs der Vorrichtung 1 aus Figur 3, aus welcher die Zuführposition 21 und die Übernahmeposition 22 zu entnehmen sind. Das Mitnahmerad 2 umfasst eine Vielzahl von Mitnehmern 26, mittels welcher jeweils ein Behälterverschluss von der Zuführposition 21 zur Übernahmeposition 22 bewegt wird. Das Mitnahmerad 2 umfasst der Übernahmeposition 22 direkt vorgelagert eine Rampe 27, mittels welcher die Behälterverschlüsse 9 in Richtung der Verschließeinheit 103 angehoben werden, sodass die Verschließeinheit 103 den Behälterverschluss 9 aufnehmen kann. Alternativ oder zusätzlich kann die Verschließeinheit 103 auch auf das Mitnahmerad 2 abgesenkt werden, um den Behälterverschluss 9 aufzunehmen beziehungsweise um ein Aufnehmen des Behälterverschlusses zu unterstützen. Zum Aufnehmen und/oder Halten des Behälterverschlusses 9 kann die Verschließeinheit 103 eine Magneteinheit (nicht gezeigt) aufweisen.

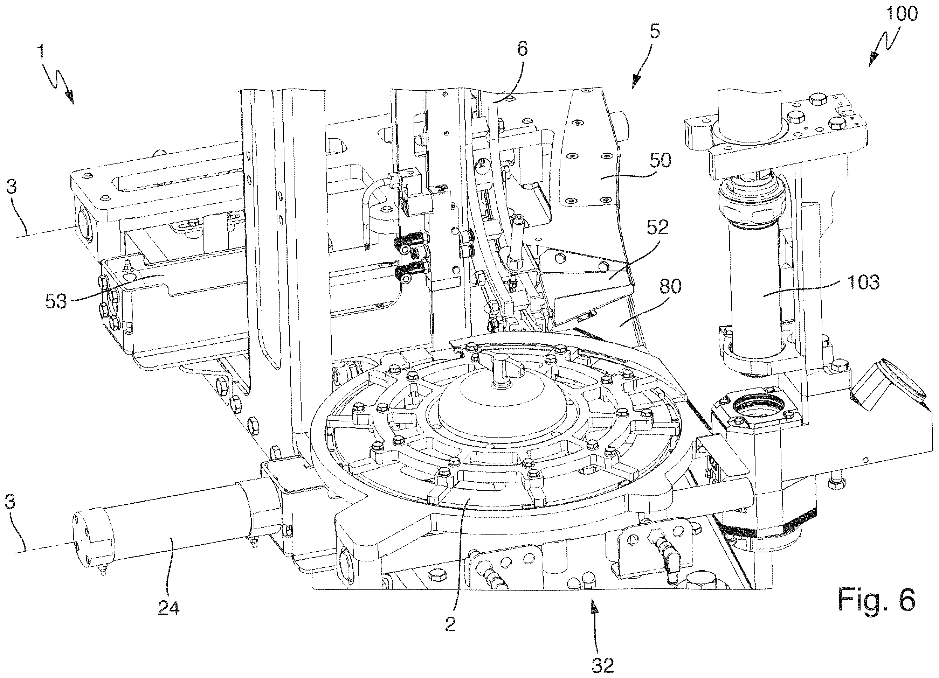

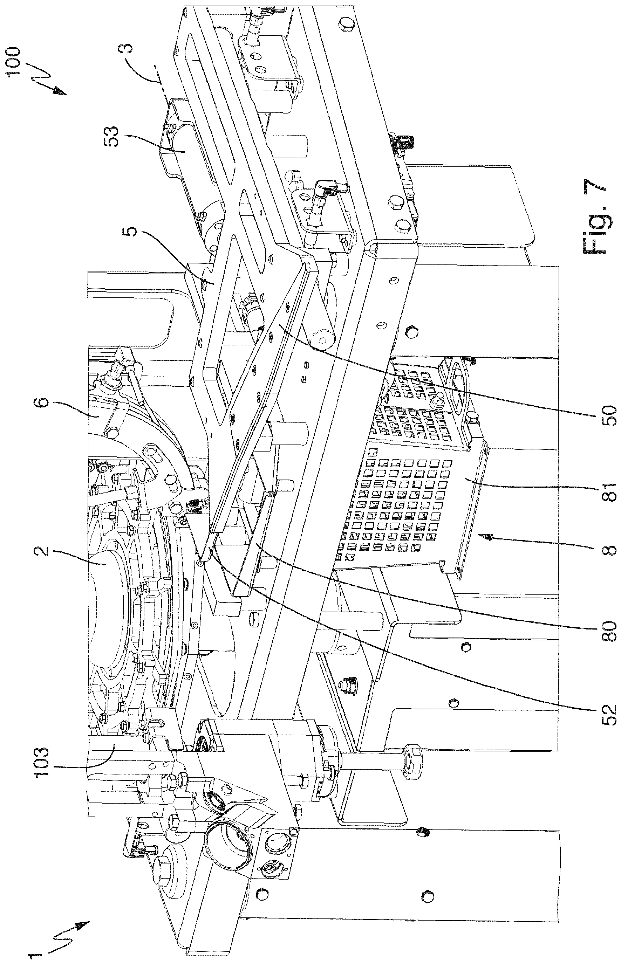

Figuren 6 und 7 zeigen schematisch perspektivische Detailansichten der Verschließvorrichtung 100 mit der Vorrichtung 1 gemäß der Figuren 3 und 4, wobei das Mitnahmerad 2 und die Abstreifeinheit 5 in Verschieberichtung 3 aus der in den Figuren 3 und 4 gezeigten Betriebsposition 31 in die rückgezogene Position 32 verschoben vorliegen.

Durch das Zurückziehen des Mitnahmerades 2 können in der Verschlusszufuhr 6 vorliegende Behälterverschlüsse in die Verschlussauffangeinheit 8 ausgeleitet werden.

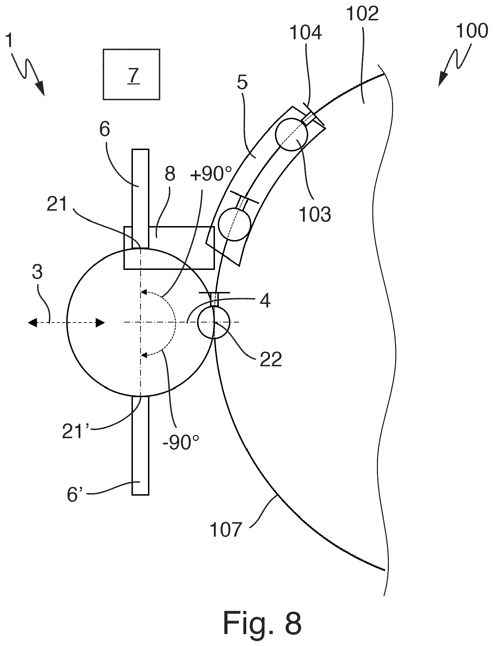

Aus Figur 8 ist schematisch eine Draufsicht einer Verschließvorrichtung 100 für Behälterverschlüsse mit einer Vorrichtung 1 zum Zuführen eines Behälterverschlusses an die Verschließvorrichtung 100 gemäß einer weiteren Ausführungsform zu entnehmen. Die Verschließvorrichtung 100 entspricht im Wesentlichen jener aus Figur 1, wobei die Vorrichtung 1 eine Mehrzahl von Verschlusszufuhren 6, 6', vorliegend zwei Verschlusszufuhren 6, 6', umfasst. Jede der Verschlusszufuhren 6, 6' sind zum Zuführen eines bestimmten Typs von unterschiedlichen Typen von Behälterverschlüssen 9 ausgebildet. Bezogen auf eine sich durch die Übernahmeposition 22 in Richtung der Verschieberichtung 3 des Mitnahmerades 2 erstreckende Achse sind die Verschlusszufuhren 6, 6' auf gegenüberliegenden Seiten des Mitnahmerades 2 angeordnet. Vorliegend sind die Verschlusszufuhren 6, 6' jeweils senkrecht zur Verschieberichtung 3 orientiert. Alternativ können Sie aber auch jeweils in einem Bereich von ±90° zur Verschieberichtung 3 auf Seiten der Übernahmeposition 22 angeordnet sein, wie in Figur 8 angedeutet.

### Bezugszeichenliste

- 1: Vorrichtung
- 2: Mitnahmerad
- 20: Drehachse
- 21: Zuführposition
- 22: Übernahmeposition
- 23: Transportteilkreis
- 24: Antrieb
- 25: Transportrichtung
- 26: Mitnehmer
- 27: Rampe
- 3: Verschieberichtung
- 31: Betriebsposition
- 32: Rückgezogene Position
- 33: Verschiebung
- 4: Gerade
- 5: Abstreifeinheit
- 50: Abstreiferplatte
- 51: Magnetelement
- 52: Ableitblech
- 53: Antrieb
- 6: Verschlusszufuhr
- 60: Zuführrinne
- 7: Steuerung/Regelung
- 8: Verschlussauffangeinheit
- 80: Zulauf
- 81: Aufnahmewanne
- 9: Behälterverschluss

- 100: Verschließvorrichtung
- 101: Drehachse
- 102: Karussell
- 103: Verschließeinheit
- 104: Abstreifblech
- 105: Behälteraufnahme
- 106: Bewegungsrichtung
- 107: Förderteilkreis
- 108: Längsrichtung

## Patentansprüche

1. Vorrichtung (1) zum Zuführen eines Behälterverschlusses (9), bevorzugt eines Kronkorkens, an eine Verschließvorrichtung (100) zum Verschließen eines Behälters mit einem Behälterverschluss (9), umfassend ein drehbares Mitnahmerad (2) zum Transportieren eines Behälterverschlusses (9) von einer Zuführposition (21), an welcher der zuzuführende Behälterverschluss (9) von einer Verschlusszufuhr (6) zugeführt wird, zu einer Übernahmeposition (22), an welcher der transportierte Behälterverschluss (9) von einer Verschließvorrichtung (100) übernommen wird,
**dadurch gekennzeichnet, dass**
das Mitnahmerad (2) zwischen einer zur Übernahmeposition (22) korrespondierenden Betriebsposition (31) und einer rückgezogenen Position (32), in welcher das Mitnahmerad (2) von der Übernahmeposition (22) beabstandet ist, verschiebbar ausgebildet ist.

2. Vorrichtung (1) (1) gemäß Anspruch 1, **dadurch gekennzeichnet, dass** das Mitnahmerad (2) um eine bevorzugt im Wesentlichen vertikal orientierte Drehachse (20) drehbar ist, und/oder eine Verschieberichtung (3) des Mitnahmerades (2) zwischen Betriebsposition (31) und rückgezogener Position (32) im Wesentlichen horizontal orientiert ist, und/oder die Verschieberichtung (3) senkrecht zur Drehachse (20) des Mitnahmerades (2) orientiert ist, und/oder die Verschieberichtung (3) in einer Ebene senkrecht zur Drehachse (20) betrachtet in einem Bereich von ±90° zu einer Geraden (4), die sich bezogen auf die Drehachse (20) in radialer Richtung durch die Übernahmeposition (22) erstreckt, orientiert ist, wobei die Verschieberichtung (3) bevorzugt in Richtung der Geraden (4), die sich bezogen auf die Drehachse (20) in radialer Richtung durch die Übernahmeposition (22) erstreckt, orientiert ist.

3. Vorrichtung (1) gemäß Anspruch 1 oder 2, **dadurch gekennzeichnet, dass** bezogen auf eine Bewegungsrichtung (106) der Verschließvorrichtung (100) dem Mitnahmerad (2) eine Abstreifeinheit (5) zum Entnehmen eines durch die Verschließvorrichtung (100) gehaltenen Behälterverschlusses (9) vorgelagert ist, wobei die Abstreifeinheit (5) bevorzugt eine Abstreiferplatte (50) und ein Entnahmeelement zum Entnehmen eines durch die Verschließvorrichtung (100) gehaltenen Behälterverschlusses (9), bevorzugt einen Vorsatz oder ein Magnetelement (51), umfasst, wobei die Abstreiferplatte (50) bevorzugt zumindest teilweise orientiert ist, um ein Abstreifen eines in Bewegungsrichtung (106) bewegbares Abstreifbleches (104) der Verschließvorrichtung (100) bereitzustellen.

4. Vorrichtung (1) gemäß dem vorstehenden Anspruch, **dadurch gekennzeichnet, dass** die Abstreifeinheit (5) zwischen einer Betriebsposition (31), in welcher ein Abstreifen via des Abstreifbleches (104) der Verschließvorrichtung (100) ermöglicht ist, und einer rückgezogenen Position (32) verschiebbar ausgebildet ist, wobei bevorzugt eine Verschieberichtung (3) der Abstreifeinheit (5) parallel zur Verschieberichtung (3) des Mitnahmerades (2) ausgebildet ist, wobei bevorzugt das Mitnahmerad (2) und die Abstreifeinheit (5) gemeinsam verschiebbar ausgebildet sind, bevorzugt via eines gemeinsamen Antriebes (24) und/oder gemeinsamen Grundgestells, oder unabhängig voneinander verschiebbar sind, wobei dem Mitnahmerad (2) und der Abstreifeinheit (5) bevorzugt jeweils ein eigener Antrieb (24, 53) zugeordnet ist.

5. Vorrichtung (1) gemäß einem der vorstehenden Ansprüche, **dadurch gekennzeichnet, dass** ein Antrieb (24) zum Verschieben des Mitnahmerads (2) aus der Betriebsposition (31) in die rückgezogene Position (32) vorgesehen ist, welcher zum Verschieben mit einer hohen Geschwindigkeit eingerichtet ist, bevorzugt in Form eines verriegelten und vorgespannten Federpakets und/oder eines verriegelten und druckbeaufschlagten Pneumatikzylinders, welches bei Vorliegen einer Kollisionswarnung durch eine Steuerung/Regelung (7) entriegelt wird, um eine schlagartige Verschiebung zu erreichen, und/oder ein Antrieb (53) zum Verschieben der Abstreifeinheit (5) von der Betriebsposition (31) in die rückgezogene Position (32) vorgesehen ist, welcher zum Verschieben mit einer hohen Geschwindigkeit eingerichtet ist, bevorzugt in Form eines verriegelten und vorgespannten Federpakets und/oder eines verriegelten und druckbeaufschlagten Pneumatikzylinders, welches bei Vorliegen einer Kollisionswarnung durch eine Steuerung/Regelung (7) entriegelt wird, um eine schlagartige Verschiebung zu erreichen.

6. Vorrichtung (1) gemäß einem der vorstehenden Ansprüche, **dadurch gekennzeichnet, dass** eine Verschlusszufuhr (6) zum sukzessiven radialen Zuführen von Behälterverschlüssen (9) an das Mitnahmerad (2) vorgesehen ist, wobei die Verschlusszufuhr (6) bevorzugt in einer Ebene senkrecht zur Drehachse (20) des Mitnahmerades (2) betrachtet in einem Bereich von ±90° zur Verschieberichtung (3) auf Seiten der Übernahmeposition (22) angeordnet ist, und/oder die Verschlusszufuhr (6) zwischen der Zuführposition (21) und einer versetzen Position bewegbar ausgebildet ist, wobei durch Bewegen der Verschlusszufuhr (6) in die versetzte Position die Verschlusszufuhr (6) außerhalb eines Kollisionsraumes des Mitnahmerades (2) bringbar ist.

7. Vorrichtung (1) gemäß dem vorstehenden Anspruch, **dadurch gekennzeichnet, dass** eine Mehrzahl von Verschlusszufuhren (6, 6`) vorgesehen ist, wobei bevorzugt jede Verschlusszufuhr (6, 6`) zum Zuführen eines Typs von unterschiedlichen Typen von Behälterverschlüssen (9) ausgebildet ist, wobei bevorzugt bezogen auf eine sich durch die Übernahmeposition (22) in Richtung der Verschieberichtung (3) des Mitnahmerades (2) erstreckende Achse auf gegenüberliegenden Seiten des Mitnahmerades (2) jeweils zumindest eine Verschlusszufuhr (6, 6`) angeordnet ist.

8. Vorrichtung (1) gemäß einem der vorstehenden Ansprüche, **dadurch gekennzeichnet, dass** eine Steuerung/Regelung (7) zum Steuern/Regeln der Position des Mitnahmerades (2), der Abstreifeinheit (5) und/oder der mindestens einen Verschlusszufuhr (6) ausgebildet ist, wobei die Steuerung/Regelung (7) bevorzugt eingerichtet ist, auf eine Kollisionswarnung hin das Mitnahmerad (2) und/oder die Abstreifeinheit (5) in die jeweilige rückgezogene Position (32) zu bewegen, und bevorzugt die mindestens eine Verschlusszufuhr (6) aus dem Kollisionsraum zu bewegen, vorzugweise jeweils mit einer hohen Geschwindigkeit und/oder quasi schlagartig.

9. Vorrichtung (1) gemäß einem der vorstehenden Ansprüche, **dadurch gekennzeichnet, dass** eine Verschlussauffangeinheit (8), bevorzugt umfassend einen bevorzugt trichterförmigen Zulauf (80) und/oder eine Aufnahmewanne (81) oder einen Aufnahmekorb, zumindest teilweise unterhalb der Abstreifeinheit (5) und/oder unterhalb des Mitnahmerades (2) angeordnet ist, wobei die Verschlussauffangeinheit (8) bevorzugt ausgebildet ist, von der Abstreifeinheit (5) abgestreifte Behälterverschlüsse (9) aufzunehmen, vorzugsweise zumindest, wenn sich die Abstreifeinheit (5) in der Betriebsposition (31) befindet, und/oder die Verschlussauffangeinheit (8) bevorzugt ausgebildet ist, von dem Mitnahmerad (2) ausgeleitete Behälterverschlüsse (9) aufzufangen, bevorzugt zumindest wenn sich das Mitnahmerad (2) in der rückgezogenen Position (32) befindet, und/oder die Verschlussauffangeinheit (8) bevorzugt ausgebildet ist, aus der Verschlusszufuhr (6) ausgeleitete Behälterverschlüsse (9) aufzufangen, bevorzugt zumindest wenn sich das Mitnahmerad (2) in der rückgezogenen Position (32) befindet.

10. Verschließvorrichtung (100) für Behälterverschlüsse (9), umfassend eine in eine Bewegungsrichtung (106) bewegbare Behälteraufnahme (105) zum Aufnehmen eines zu verschließenden Behälters und eine der Behälteraufnahme (105) zugeordnete, relativ zur Behälteraufnahme (105) bewegliche Verschließeinheit (103) zum Verschließen des in der Behälteraufnahme (105) gehaltenen Behälters mit einem Behälterverschluss (9),
**dadurch gekennzeichnet, dass**
eine Vorrichtung (1) gemäß einem der vorstehenden Ansprüche zum Zuführen eines Behälterverschlusses (9) vorgesehen ist.

11. Verschließvorrichtung (1) gemäß dem vorstehenden Anspruch, **dadurch gekennzeichnet, dass** die Verschließvorrichtung (1) in Rundläuferbauweise ausgebildet ist, wobei bevorzugt ein drehbares Karussell (102), vorzugsweise an seinem äußeren Umfang, die Behälteraufnahme (105) und die Verschließeinheit (103) aufweist, wobei bevorzugt das Mitnahmerad (2) und das Karussell (102) derart angeordnet sind, dass ein Transportteilkreis (23) des Mitnahmerades (2), auf welchem ein zuzuführender Behälterverschluss (9) durch das Mitnahmerad (2) transportiert wird, und ein Förderteilkreis (107) des Karussells (102), auf welchem die Verschließeinheit (103) durch Drehen des Karussells (102) bewegt wird, tangential zueinander angeordnet sind und/oder sich in der Übernahmeposition (22) treffen.

## Claims

1. Device (1) for supplying a container closure (9), preferably a crown cap, to a closing device (100) for closing a container with a container closure (9), comprising a rotatable carrier wheel (2) for transporting a container closure (9) from a supply position (21), at which the container closure (9) to be supplied is supplied from a closure supply (6), to a transfer position (22), at which the transported container closure (9) is received by a closing device (100),
**characterized in that**
the carrier wheel (2) is configured so as to be displaceable between an operating position (31) corresponding to the transfer position (22), and a retracted position (32) in which the carrier wheel (2) is spaced from the transfer position (22).

2. Device (1) according to Claim 1, **characterized in that** the carrier wheel (2) is rotatable about a rotational axis (20) which is preferably oriented substantially vertically, and/or a displacement direction (3) of the carrier wheel (31) between the operating position (31) and the retracted position (32) is oriented substantially horizontally, and/or the displacement direction (3) is oriented perpendicularly to the rotational axis (20) of the carrier wheel (2), and/or the displacement direction (3), viewed in a plane perpendicular to the rotational axis (20), is oriented in a region of ±90° to a straight line (4) which extends through the transfer position (22) in the radial direction relative to the rotational axis (20), wherein the displacement direction (3) is preferably oriented in the direction of the straight line (4) which extends through the transfer position (22) in the radial direction relative to the rotational axis (20).

3. Device (1) according to Claim 1 or 2, **characterized in that** a scraping unit (5) for removing a container closure (9), held by the closing device (100), is mounted upstream of the carrier wheel (2) with respect to a movement direction (106) of the closing device (100), wherein the scraping unit (5) preferably comprises a scraper plate (50) and a removal element, preferably a protrusion or a magnet element (51), for removing a container closure (9) held by the closing device (100), wherein the scraper plate (50) is preferably at least partially oriented so as to provide a scraping via a scraping sheet (104) of the closing device (100) which is movable in the movement direction (106).

4. Device (1) according to the preceding claim, **characterized in that** the scraping unit (5) is configured so as to be displaceable between an operating position (31), in which a scraping via the scraping sheet (104) of the closing device (100) is possible, and a retracted position (32), wherein preferably a displacement direction (3) of the scraping unit (5) is formed parallel to the displacement direction (3) of the carrier wheel (2), wherein preferably the carrier wheel (2) and the scraping unit (5) are configured so as to be displaceable jointly, preferably by means of a common drive (24) and/or a common base frame, or displaceable independently of one another, wherein the carrier wheel (2) and the scraping unit (5) preferably each have their own assigned drive (24, 53).

5. Device (1) according to any of the preceding claims, **characterized in that** a drive (24) is provided for displacing the carrier wheel (2) from the operating position (31) into the retracted position (32), which drive is configured for displacement at high speed, preferably in the form of a locked and preloaded spring pack and/or a locked and pressurised pneumatic cylinder which is unlocked by a controller/regulator (7) on occurrence of a collision warning in order to achieve a sudden displacement, and/or a drive (53) is provided for displacing the scraping unit (5) from the operating position (31) into the retracted position (32), which drive is configured for displacement at high speed, preferably in the form of a locked and preloaded spring pack and/or a locked and pressurised pneumatic cylinder which is unlocked by a controller/regulator (7) on occurrence of a collision warning in order to achieve a sudden displacement.

6. Device (1) according to any of the preceding claims, **characterized in that** a closure supply (6) is provided for successive radial supply of container closures (9) to the carrier wheel (2), wherein the closure supply (6) is preferably arranged at the sides of the transfer position (22), viewed in a plane perpendicular to the rotational axis (20) of the carrier wheel (2), in a region of ±90° to the displacement direction (3), and/or the closure supply (6) is configured so as to be movable between the supply position (21) and an offset position, wherein by movement of the closure supply (6) into the offset position, the closure supply (6) can be brought outside a collision space of the carrier wheel (2).

7. Device (1) according to the preceding claim, **characterized in that** a plurality of closure supplies (6, 6`) is provided, wherein preferably each closure supply (6, 6`) is configured to supply one type from various types of container closures (9), wherein preferably, at least one closure supply (6, 6`) is arranged on each opposite side of the carrier wheel (2) with respect to an axis extending through the transfer position (22) in the direction of the displacement direction (3) of the carrier wheel (2).

8. Device (1) according to any of the preceding claims, **characterized in that** a controller/regulator (7) is configured for controlling/regulating the position of the carrier wheel (2), the scraping unit (5) and/or the at least one closure supply (6), wherein the controller/regulator (7) is preferably configured, on occurrence of a collision warning, to move the carrier wheel (2) and/or the scraping unit (5) into the respective retracted position (32), and preferably move the at least one closure supply (6) out of the collision space, preferably in each case with a high speed and/or quasi-abruptly.

9. Device (1) according to any of the preceding claims, **characterized in that** a closure collecting unit (8), comprising a preferably hopper-shaped inlet (80) and/or a collecting trough (81) or a collecting basket, is arranged at least partially below the scraping unit (5) and/or below the carrier wheel (2), wherein the closure collecting unit (8) is preferably configured to collect container closures (9) scraped off by the scraping unit (5), preferably at least when the scraping unit (5) is in the operating position (31), and/or the closure collecting unit (8) is preferably configured to collect container closures (9) discharged from the carrier wheel (2), preferably at least when the carrier wheel (2) is in the retracted position (32), and/or the closure collecting unit (8) is preferably configured to collect container closures (9) discharged from the container supply (6), preferably at least when the carrier wheel (2) is in the retracted position (32).

10. Closing device (100) for container closures (9), comprising a container receiver (105) which is movable in a movement direction (106) for receiving a container to be closed, and a closing unit (103) assigned to the container receiver (105) and movable relative to the container receiver (105), for closing the container held in the container receiver (105) with a container closure (9),
**characterized in that**
a device (1) according to any of the preceding claims is provided for supplying a container closure (9).

11. Closing device (1) according to the preceding claim, **characterized in that** the closing device (1) is configured as a carousel, wherein preferably a rotatable carousel (102) comprises, preferably on its outer circumference, the container receiver (105) and the closing unit (103), wherein preferably the carrier wheel (2) and the carousel (102) are arranged such that a transport pitch circle (23) of the carrier wheel (2), on which a container closure (9) to be supplied is transported by the carrier wheel (2), and a conveying pitch circle (107) of the carousel (102), on which the closing unit (103) is moved by rotation of the carousel (102), are arranged tangentially to one another and/or meet in the transfer position (22).

## Revendications

1. Dispositif (1) permettant d'amener une fermeture de récipient (9), de préférence un bouchon couronne, sur un dispositif de fermeture (100) permettant de fermer un récipient avec une fermeture de récipient (9), comprenant une roue d'entraînement (2) rotative permettant de transporter une fermeture de récipient (9) d'une position d'amenée (21), à laquelle la fermeture de récipient (9) à amener est amenée par une amenée de fermeture (6), à une position de reprise (22), à laquelle la fermeture de récipient (9) transportée est reprise par un dispositif de fermeture (100),
**caractérisé en ce que**
la roue d'entraînement (2) est conçue de manière à pouvoir être déplacée entre une position de fonctionnement (31) correspondant à la position de reprise (22) et une position rétractée (32) dans laquelle la roue d'entraînement (2) est à une certaine distance de la position de reprise (22).

2. Dispositif (1) (1) selon la revendication 1, **caractérisé en ce que** la roue d'entraînement (2) peut tourner autour d'un axe de rotation (20) orienté de préférence sensiblement verticalement, **et/ou** une direction de déplacement (3) de la roue d'entraînement (2) entre la position de fonctionnement (31) et la position rétractée (32) est orientée sensiblement horizontalement, **et/ou** la direction de déplacement (3) est orientée perpendiculairement à l'axe de rotation (20) de la roue d'entraînement (2), **et/ou** la direction de déplacement (3), vue dans un plan perpendiculaire à l'axe de rotation (20), est orientée dans une plage de ±90° par rapport à une droite (4) qui, par rapport à l'axe de rotation (20), s'étend dans la direction radiale à travers la position de reprise (22), dans lequel la direction de déplacement (3) est orientée de préférence dans la direction de la droite (4) qui, par rapport à l'axe de rotation (20), s'étend dans la direction radiale à travers la position de reprise (22).

3. Dispositif (1) selon la revendication 1 ou 2, **caractérisé en ce que,** par rapport à une direction de déplacement (106) du dispositif de fermeture (100), une unité de raclage (5) permettant de retirer une fermeture de récipient (9) maintenue par le dispositif de fermeture (100) est placée en amont de la roue d'entraînement (2), dans lequel l'unité de raclage (5) comprend de préférence une plaque de raclage (50) et un élément de retrait permettant de retirer une fermeture de récipient (9) maintenue par le dispositif de fermeture (100), de préférence un accessoire ou un élément magnétique (51), dans lequel la plaque de raclage (50) est de préférence orientée au moins partiellement pour fournir un raclage par une tôle de raclage (104) du dispositif de fermeture (100), laquelle tôle de raclage est mobile dans la direction de déplacement (106).

4. Dispositif (1) selon la revendication précédente, **caractérisé en ce que** l'unité de raclage (5) est conçue de manière à pouvoir être déplacée entre une position de fonctionnement (31), dans laquelle un raclage est possible par le biais de la tôle de raclage (104) du dispositif de fermeture (100), et une position rétractée (32), dans lequel de préférence une direction de déplacement (3) de l'unité de raclage (5) est conçue parallèlement à la direction de déplacement (3) de la roue d'entraînement (2), dans lequel de préférence la roue d'entraînement (2) et l'unité de raclage (5) sont réalisées de manière à pouvoir être déplacées ensemble, de préférence par le biais d'un entraînement commun (24) et/ou d'un châssis de base commun, ou peuvent être déplacées indépendamment l'une de l'autre, dans lequel un entraînement propre (24, 53) est de préférence associé à la roue d'entraînement (2) et à l'unité de raclage (5).

5. Dispositif (1) selon l'une des revendications précédentes,
**caractérisé en ce qu'**il est prévu un entraînement (24) permettant de déplacer la roue d'entraînement (2) de la position de fonctionnement (31) à la position rétractée (32), lequel entraînement est conçu pour un déplacement à vitesse élevée, de préférence sous la forme d'un paquet de ressorts verrouillé et précontraint et/ou d'un vérin pneumatique verrouillé et soumis à une pression, qui est déverrouillé par un moyen de commande/réglage (7) en cas d'avertissement de collision, pour obtenir un déplacement par à-coups, **et/ou** il est prévu un entraînement (53) permettant de déplacer l'unité de raclage (5) de la position de fonctionnement (31) à la position rétractée (32), lequel entraînement est conçu pour un déplacement à vitesse élevée, de préférence sous la forme d'un paquet de ressorts verrouillé et précontraint et/ou d'un vérin pneumatique verrouillé et soumis à une pression, qui est déverrouillé par un moyen de commande/réglage (7) en cas d'avertissement de collision, pour obtenir un déplacement par à-coups.

6. Dispositif (1) selon l'une des revendications précédentes,
**caractérisé en ce qu'**il est prévu une amenée de fermeture (6) pour l'amenée radiale successive de fermetures de récipient (9) à la roue d'entraînement (2), dans lequel l'amenée de fermeture (6) est disposée de préférence vu dans un plan perpendiculaire à l'axe de rotation (20) de la roue d'entraînement (2), dans une plage de ±90° par rapport à la direction de déplacement (3), de part et d'autre de la position de reprise (22), **et/ou** l'amenée de fermeture (6) est réalisée pour être mobile entre la position d'amenée (21) et une position décalée, dans lequel l'amenée de fermeture (6) peut être amenée en dehors d'un espace de collision de la roue d'entraînement (2) par déplacement de l'amenée de fermeture (6) dans la position décalée.

7. Dispositif (1) selon la revendication précédente, **caractérisé en ce qu'**il est prévu une pluralité d'amenées de fermeture (6, 6'), dans lequel chaque amenée de fermeture (6, 6') est de préférence conçue pour amener un type de fermetures de récipient (9) parmi différents types, dans lequel respectivement au moins une amenée de fermeture (6, 6') est de préférence disposée sur des côtés opposés de la roue d'entraînement (2) par rapport à un axe s'étendant à travers la position de reprise (22) dans la direction de déplacement (3) de la roue d'entraînement (2).

8. Dispositif (1) selon l'une des revendications précédentes,
**caractérisé en ce qu'**un moyen de commande/réglage (7) est conçu pour commander/régler la position de la roue d'entraînement (2), de l'unité de raclage (5) et/ou de l'au moins une amenée de fermeture (6), dans lequel le moyen de commande/réglage (7) est de préférence adapté pour déplacer, en réponse à un avertissement de collision, la roue d'entraînement (2) et/ou l'unité de raclage (5) dans la position rétractée (32) respective, et de préférence pour déplacer l'au moins une amenée de fermeture (6) hors de l'espace de collision, de préférence respectivement à une vitesse élevée et/ou presque d'un seul coup.

9. Dispositif (1) selon l'une des revendications précédentes,
**caractérisé en ce qu'**une unité collectrice de fermeture (8), comprenant de préférence une arrivée (80) de préférence en forme d'entonnoir et/ou un bac de collecte (81) ou un panier de collecte, est disposée au moins partiellement en dessous de l'unité de raclage (5) et/ou en dessous de la roue d'entraînement (2), dans lequel l'unité collectrice de fermeture (8) est de préférence conçue pour recevoir des fermetures de récipient (9) raclées de l'unité de raclage (5), de préférence au moins lorsque l'unité de raclage (5) se trouve dans la position de fonctionnement (31), **et/ou** l'unité collectrice de fermeture (8) est de préférence conçue pour collecter des fermetures de récipient (9) évacuées par la roue d'entraînement (2), de préférence au moins lorsque la roue d'entraînement (2) se trouve dans la position rétractée (32), **et/ou** l'unité collectrice de fermeture (8) est de préférence conçue pour collecter des fermetures de récipient (9) évacuées de l'amenée de fermeture (6), de préférence au moins lorsque la roue d'entraînement (2) se trouve dans la position rétractée (32).

10. Dispositif de fermeture (100) pour fermetures de récipients (9), comprenant un logement de récipient (105) mobile dans une direction de déplacement (106) et destiné à recevoir un récipient à fermer et une unité de fermeture (103) associée au logement de récipient (105) et mobile par rapport au logement de récipient (105), laquelle unité de fermeture permet de fermer, avec une fermeture de récipient (9), le récipient maintenu dans le logement de récipient (105),
**caractérisé en ce que**
un dispositif (1) selon l'une des revendications précédentes est prévu pour amener une fermeture de récipient (9).

11. Dispositif de fermeture (1) selon la revendication précédente,
**caractérisé en ce que** le dispositif de fermeture (1) est de conception circulaire, dans lequel de préférence un carrousel (102) rotatif présente, de préférence sur sa périphérie extérieure, le logement de récipient (105) et l'unité de fermeture (103), dans lequel de préférence la roue d'entraînement (2) et le carrousel (102) sont disposés de telle sorte qu'un cercle partiel de transport (23) de la roue d'entraînement (2), sur lequel une fermeture de récipient (9) à amener est transportée par la roue d'entraînement (2), et un cercle partiel de transport (107) du carrousel (102), sur lequel l'unité de fermeture (103) est déplacée par rotation du carrousel (102), sont disposés tangentiellement l'un à l'autre et/ou se rencontrent dans la position de reprise (22).
